**Europäisches Patentamt**

**European Patent Office**

**Office européen des brevets**

(19)

(11) Publication number: **0 374 106**
**A2**

## EUROPEAN PATENT APPLICATION

(12)

(21) Application number: 89830529.7

(51) Int. Cl.⁵: **B23Q 7/05**

(22) Date of filing: 29.11.89

(30) Priority: 14.12.88 IT 1178988 U

(43) Date of publication of application:
20.06.90 Bulletin 90/25

(84) Designated Contracting States:
**DE ES FR GB**

(71) Applicant: **PERTICI S.P.A.**
**Viale della Repubblica No. 50**
**I-50050 Gambassi (Firenze)(IT)**

(72) Inventor: **Canacci, Gherardo**
**Via S. Pellico No. 46**
**Certaldo, Firenze(IT)**

(74) Representative: **Mannucci, Gianfranco,**
**Dott.-Ing.**
**Ufficio Tecnico Ing. A. Mannucci Via della**
**Scala 4**
**I-50123 Firenze(IT)**

(54) **Feed roller conveyer with a drive made up of flexible members.**

(57) A feed roller conveyer for working board or sheet shaped material, to be combined to a tool machine, comprises one or more feeding groups (5) carried by a common beam (1), each group being provided with one or more feeding rollers, and a common motorization unit (29) for said feeding groups; between said common motorization unit (29) and each of said feeding groups (5) flexible drive means (23, 25, 27) are provided cooperating with corresponding transmission members (19, 21) carried by corresponding vertical shafts (17) combined to each of said feeding groups (5); each of said vertical shafts transmits the motion to underlying transfer rollers through a bevel gear pair (33, 35).

FIG .1

## FEED ROLLER CONVEYER WITH A DRIVE MADE UP OF FLEXIBLE MEMBERS

The invention relates to a feed roller conveyer for working board or sheet-shaped material, to be combined to a tool machine, said conveyer having one or more feeding groups carried by a common beam, each group comprising one or more feeding rollers, and with a common motorization unit for said feeding groups.

In the roller conveyers of this type as presently known, the drive between the common motorization unit and the individual feeding groups takes place by means of a common continuous shaft, on which there are keyed bevel gears in a number corresponding to the number of the feeding groups to which the motion is to be transmitted. Each feeding group is in turn provided with a vertical shaft carrying at its upper end a bevel gear which makes up, with the corresponding gear keyed on the common shaft, a bevel gear pair for the transmission of the motion to the underlying members and thus to the feeding rollers. This solution has several drawbacks.

As a matter of fact, with a disposition of this type the mechanical members making up the drive must be worked with very precise tolerances. Moreover, on the same shaft more gears must be keyed which have to be meshed with corresponding gears each borne by a support (provided in each individual feeding group), which is in turn fitted, with more or less wide tolerances, to a supporting beam. To achieve a correct meshing and thus a correct operation of each bevel gear pair, it is necessary to work with extreme accuracy not only the drive shaft, but also the supports of all the vertical shafts of each feeding group and it is further necessary to detect with accuracy and very close tolerances the point at which every single feeding group is to be be applied to the beam. The seats of the screws for the connection of the feeding groups to the supporting beam must be located with close tolerances. This is particularly difficult when the conveyer has large dimensions and is provided with a high number of feeding groups.

Moreover, possible thermal expansions of the drive shaft and/or of the beam supporting the individual feeding groups may cause an incorrect meshing of the bevel gears making up the bevel gear pairs of the various feeding groups with consequent occurrence of mechanical stresses, even fatigue stresses, on the rotating members, and noise increase.

An object of the invention is a conveyor of the abovementioned type, which does not have these drawbacks. This and other objects, which will become apparent to those skilled in the art by reading the following description, are obtained with a conveyer which is characterized in that, between said common motorization unit and each feeding groups, flexible drive means are provided which cooperate with corresponding transmission members carried by corresponding vertical shafts associated to each of said feeding groups, and that each of said vertical shafts transmits the motion to the underlying transfer roller(s) through a bevel gear pair.

Advantageously, the conveyer according to the invention may comprise a first flexible member between the said common motorization unit and the first feeding group and a flexible member between each pair of adjacent feeding groups. The use of flexible members avoids any drawbacks due to work tolerances as even wide working allowances can be recovered. In particular, no accuracy is needed in determining the points of application of the drive groups to the supporting beam and, therefore, the latter may be worked in an extremely economical manner. All the clearances can be easily recovered. Moreover, all the problems deriving from possible thermal expansions are eliminated and the mechanical stresses on the moving members are reduced, in particular all those stresses due to work or assembly tolerances and to mechanical or thermal deformations of the conveyer members.

It is also possible to provide an idler combined to one or more or all of the flexible members making up the drive.

Chains may be used as flexible members, but it should be appreciated that the same advantages as those illustrated above may be obtained in a perfectly equivalent manner by using belts, toothed belts or the like.

The drive may be suitably covered by a guard made in one or more sections for the sake of safety and functionality.

To control the oscillation of the various feeding groups it is possible to provide, for each of said groups, an actuator able to cause the oscillation of the portion of said feeding group that can be oriented with respect to the supporting beam, and a means for blocking and releasing the feeding group portion which can be oriented. In practice, said actuators may be hydraulic or pneumatic actuators and may serve both for controlling the oscillation and for blocking and releasing the oscillating portion of the feeding groups with respect to the fixed part.

The drawing shows a feasible embodiment of the invention, and in particular:

Fig.1 shows a plan view of a portion of the conveyer according to the invention;

Fig.2 shows a side view on line II-II of Fig. 1;

Fig.3 shows a partly sectioned plan view of a feeding group; and

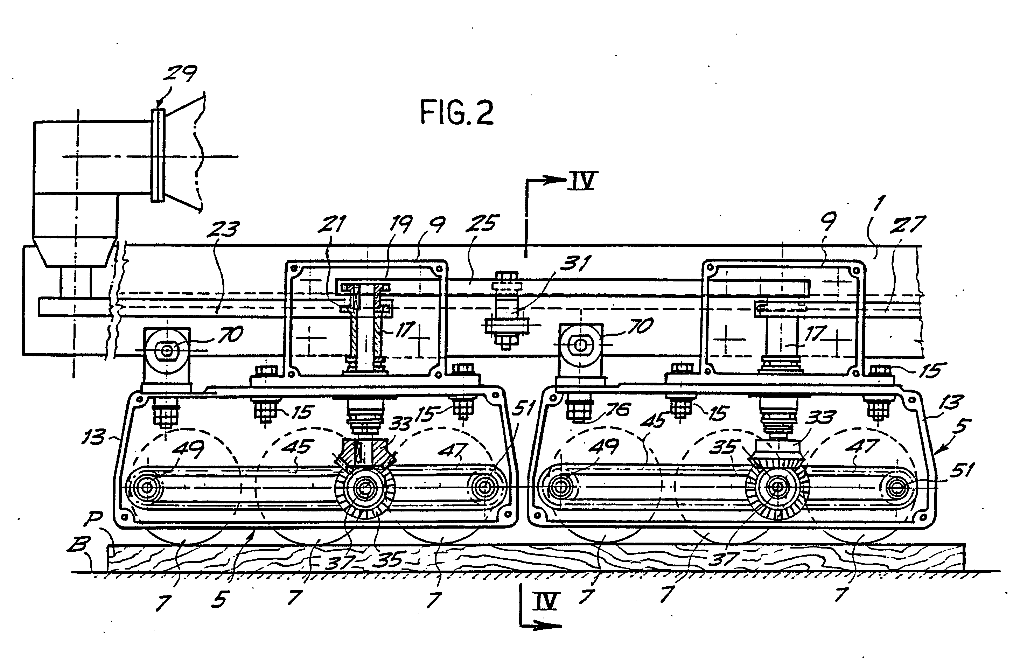

Fig .4 shows a section on line IV-IV of Fig. 2.

The conveyer according to the invention comprises an H-beam solid to an arm 3 carried in known (and not shown) way by the tool machine to which the conveyer is combined. Along the beam 1 there are engaged feeding groups generally indicated by 5, each of which comprises (in the illustrated emodiment) three feeding rollers 7 borne by respective oscillating axes and driven into rotation as described below in greater detail.

Each feeding group 5 comprises a first box 9 solid to the beam 1 and connected thereto by screws 11, and a second box 13 connected to the first box 9 by four screws 15. The holes through which the screws 15 go into the respective walls of boxes 13 of each group are of such dimensions as to allow the oscillation of box 9 relative to box 13 and thus an oscillation of box 13 with respect to beam 1. The screws 11 do not clamp boxes 9, 13 one to the other, but allow a relative oscillation movement between them for the purposes to be set forth below.

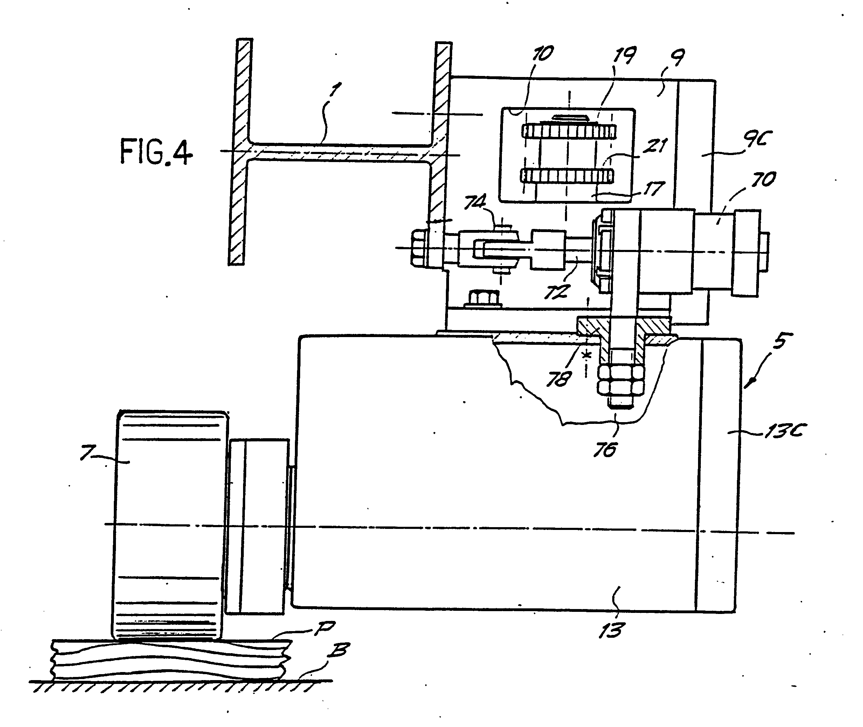

Inside each group (see in particular Fig. 2, in which boxes 9, 13 are shown open, that is, without the relevant covers 9C, 13C), a vertical shaft 17 is disposed which, in its upper part, carries two chain wheels 19, 21 on which the respective chains 23, 25, 27 are driven for the transmission of the motion drawn from a single motor reducer 29 located at one end of beam 1. From the motor reducer 29 the motion is trasmitted, through the first chain 23, to the vertical shaft 17 of the first feeding group 5. The motion is transmitted, through the second chain 25, from the vertical shaft 17 of the first feeding group 5 to the vertical shaft 17 of the second feeding group 5. From this, the other chain 27 transmits the motion to a next feeding group 5 not shown. Accordingly, chains 23, 25, 27 transmit the motion, drawn from a single motor reducer 29, to all the feeding groups carried by beam 1. In each single length of chain 23, 25, 27 a jockey pulley or idler may be provided like the one indicated by 31 and combined to chain 25. To allow the passage of chains 23, 25, 27, the boxes 9 are suitably slotted at 10 (Fig. 4).

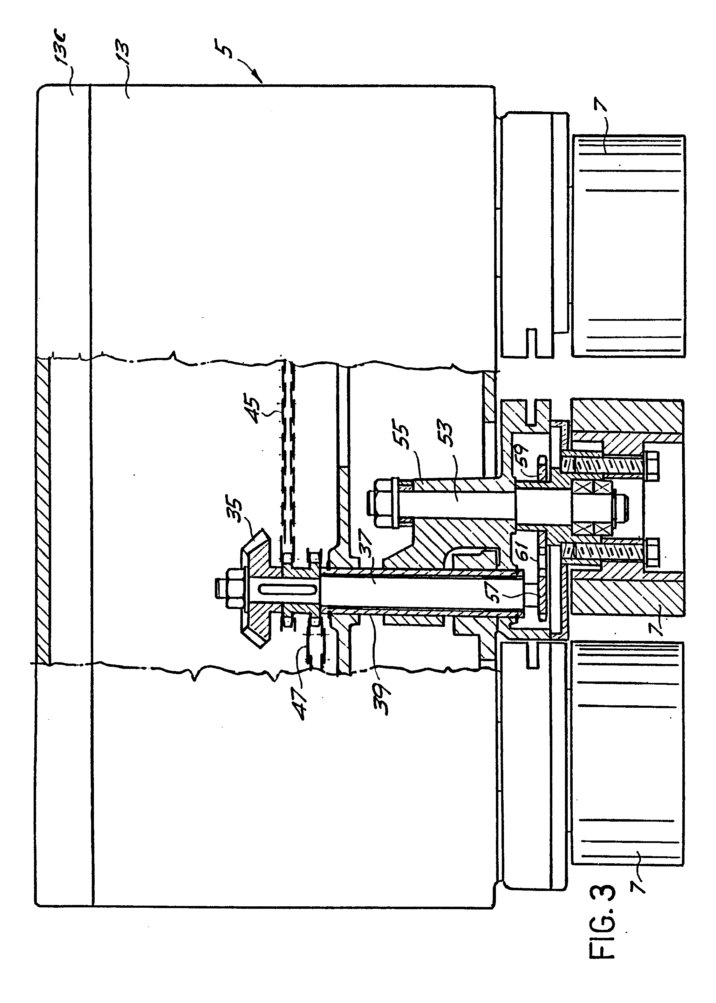

The vertical shaft 17 of each feeding group 5 carries, at its lower end, a bevel gear 33 meshing with a second bevel gear 35 keyed on a horizontal shaft 37 supported by bushes inside a tubular sheath 39 which is in turn supported within seats formed in box 13. The shaft 37 carries, in a manner known per se, chain wheels 41, 43 on which chain 45, 47 are moved for the transmission of the motion to two respective further external horizontal shafts 49, 51 carried, in a manner known per se, inside box 13. The horizontal shafts 37, 49, 51 transmit the motion to the oscillating shanks of the feeding rollers 7. Fig. 3 shows, with reference to the intermediate roller 7, the disposition of shank 53 of the same roller, the mechanism for the transmission of motion and the support and oscillation system. As illustrated in the drawing, roller 7 is supported by shank 53 which is in turn supported by an arm 55 oscillating about the tubular sheath 39. The motion is transmitted to roller 7 by a gear pair 57, 59 and by a flexible element, such as a chain or a belt 61, driven thereon. The same disposition is repeated for the external rollers 7 to which the motion is transmitted by the horizontal external shafts 49, 51.

The above described conveyer is applied on tool machines provided with a plurality of different tools to carry out workings on boards and listels made of wood, synthetic material or similar materials. To this end the workpiece, indicated by P in Figs.2 and 4, is placed on the bench B of the toolmachine and is moved forward by the conveyer rollers 7 against the tools of the machine. In order to perform both frontal and side workings on either sides of workpiece P, rollers 7 must be able to oscillate about a vertical axis. In the conveyer according to the invention, the oscillation of rollers 7 takes place, for each feeding group 5, about a vertical axis coinciding with the axis of the vertical shaft 17. The oscillation is performed by the whole box 13 within which there are supported the horizontal shafts for the transmission of motion to the individual rollers 7 of the group, while box 9 does not move with respect to beam 1 and thus to the tool machine on which the conveyer is applied.

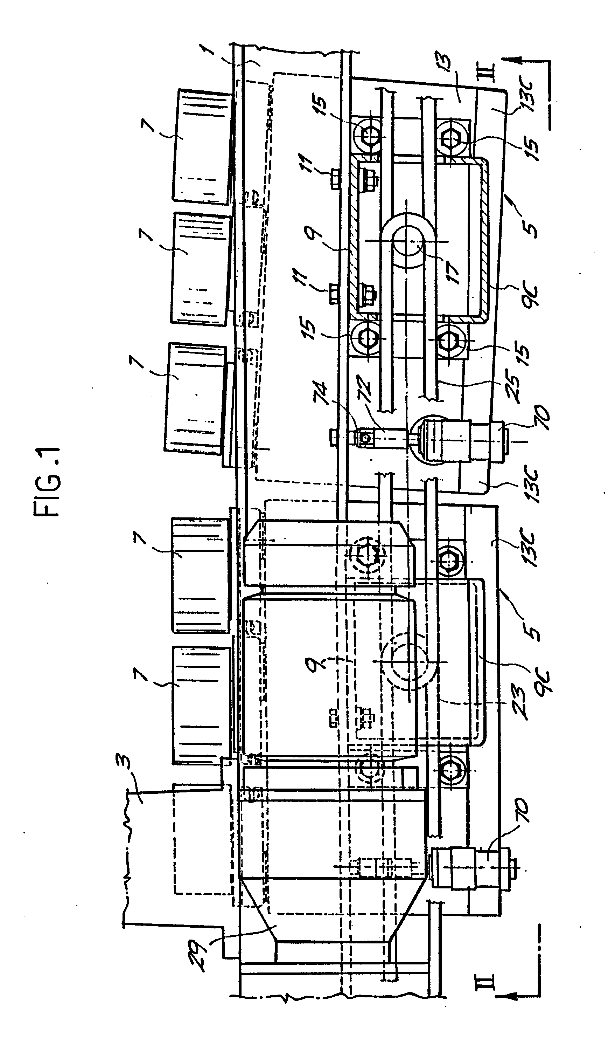

To control the oscillation for each feeding group 5 there is provided an actuator 70 which, in the example shown, is a cylinder-piston system whose stem 72 is connected to beam 1 through a joint 74. To the actuator cylinder 70 is solid a threaded pin 76 which is engaged inside a bush 78 solid to box 5. The actuation of the cylinder-piston system causes an oscillation of box 13 about the axis of the respective vertical shaft 17, so that the box 13 may take up either the position shown in Fig. 1 for the right group 5 (for an observer looking at the drawing) with box 13 rotated in clockwise direction with respect to the axis of beam 1, or the opposite position, with box 13 rotated in anti-clockwise direction with respect to the axis of beam 1. It is evident that during the operation of the machine tool, and thus during the actuation of the feeding rollers 7, all the rollers 7 will be inclined according to the same direction and by the same angle with respect to beam 1 to allow a correct movement of workpiece P.

The use of actuators 70 allow the inclination of the boxes 13 of feeding groups 5 to be changed

3

during the machine operation, with no need to stop the working. In this way, during a single working it is possible to work piece P on both sides by providing tools lined up on both sides of the conveyer. In fact, when the working of one side of piece P is ended, working which is carried out for example by the tools on the right side of the conveyer, it is possible to reverse the inclination of the feeding rollers so that on the next working phase they urge the piece against the tools placed on the opposite side of the conveyer or against a square or jig means for the calibration. The two working phases may be carried out in sequence without any intervention on the machine.

As previously mentioned, the oscillation of the feeding rollers 7 is made possible by the connection between boxes 9 and 13, which connection is such as not to tighten and block the box 13 with respect to box 9. As a result, the moments exerted by the workpiece on box 13 through the feeding rollers 7 must be discharged on beam 1 through stem 72 of actuator 70 and through joint 74. On the other hand, since the rollers 7 of each feeding group 5 are disposed on both sides of the oscillation axis of box 13 - that is, on both sides of the vertical shaft 17 - the moments which are discharged on the box 13 are relatively low and may be easily withstood by stem 72 and joint 74 of actuator 70.

## Claims

1. A feed roller conveyer for working board or sheet-shaped material, to be combined to a tool machine, with one or more feeding groups (5) carried by a common beam (1), each group comprising one or more feeding rollers, and with a common motorization unit (29) for said feeding groups, characterized in that between said common motorization unit (29) and each of said feeding groups (5) flexible drive means (23, 25, 27) are provided cooperating with corresponding transmission members (19, 21) carried by corresponding vertical shafts (17) combined to each of said feeding groups (5), and that each of said vertical shafts transmits the motion to underlying transfer rollers throug a bevel gear pair (33, 35).

2. Conveyer according to claim 1, characterized in that it comprises a first flexible member (23) between said common motorization unit (19) and the first feeding group (5) and a further flexible member (25, 27) between each pair of adjacent feeding groups (5).

3. Conveyer according to the preceding claims, characterized in that it comprises an idler (31) combined to at least one of said flexible members (23, 25, 27).

4. Conveyer according to the preceding claims, characterized in that said flexible members are chains.

5. Conveyer according to the preceding claims, characterized in that it comprises elements for covering said flexible members.

6. Conveyer according to the preceding claims, characterized in that to each feeding group (5) an actuator (70) is combined, which is able to cause the oscillation of the portion (13) of said feeding group (5) that can be oriented with respect to the supporting beam (1), and means for blocking and releasing the portion (13) of the feeding group able to be oriented.

7. Conveyer according to claim 6, characterized in that said actuator is a cylinder-piston system.

8. Conveyer according to claim 6 or 7, characterized in that the stem (72) of said actuator is engaged to said supporting beam (1) through a joint (74), and that the cylinder of said actuator (70) is engaged to the portion (13), of the respective feeding group (5), able to be oriented.

9. Conveyer according to claims 6 to 8, characterized in that said actuator (70) is at the same time a means for the oscillation and for the blocking of the respective feeding group (5).

# FIG .1

EP 0 374 106 A2

FIG.2

FIG. 3

FIG.4

1

10 19 9

9C

21

17

74 70

72

5

78

76

13C

7

13

P

B

EP 0 374 106 A2